# EUROPEAN PATENT SPECIFICATION

(11) **EP 1 935 929 B1**
(45) Date of publication and mention of the grant of the patent: **30.11.2011**
(21) Application number: 06126485.9
(22) Date of filing: 19.12.2006
(51) Int. Cl.: C08J 5/18, C09D 183/04, C09D 183/02, C08L 83/02, C08L 83/04

(54) **Sol gel process for producing protective films for polymeric substrates**
Sol-Gel-Prozess zur Herstellung von Schutzfolien für Polymersubstrate
Procédé de gel de sol pour produire des films de protection pour des substrats polymères

(43) Date of publication of application: 25.06.2008
(73) Proprietor: Evonik Degussa GmbH, 45128 Essen (DE)
(72) Inventor: Fregonese, Daniele, Dr., 30030 Vigonovo (VE) (IT); Costa, Fulvio, 27048 Sommo (IT)
(74) Representative: Hirsch, Hans-Ludwig

(56) References cited:
- EP-A- 1 449 811
- EP-A1- 1 029 827
- WO-A-2004/007384
- WO-A-2004/107297
- US-A- 3 986 997
- US-A- 6 017 389
- US-A- 6 139 613

## Description

The subject of the invention is a process for the preparation of hydrophobic transparent films on substrates.

Plastic materials, such as polycarbonate (PC) and polymethylmethyacrylate (PMMA), are nowadays used in many application areas such as automotive, constructions, electronics, headlamps, and sunroofs among the others.

Further development of their possibilities to enter new markets is hindered by the lack of surface hardness and abrasion resistance.

Other uses of the polymeric materials, such as glazing, decorative architectural panels and mirrors, are also limited because of this lack of abrasion resistance. In this sense a lot of work has been devoted to the development of coating to solve this issue, for instance it has been proposed to use scratch resistant coatings, such as silica-containing solutions and polysilicic acid fluorinated copolymer compositions. But these materials have found only limited commercial use because they are difficult to apply, poor in humidity resistance or expensive (U.S. Pat. No. 3,986,997).

Moreover those studies concerned film transparent in the UV region, more in particular at wavelength higher close to 287 nm which causes a breakdown in carbonate linkages accompanied by liberation of carbon monoxide and carbon dioxide and depolymerization of the substrate. Ultraviolet radiation from the sun can reach the surface of a substrate coated with an ultraviolet radiation-transparent coating and cause it to degrade. As a result, the protective coating loses adhesion and begins to flake off as the article weathers.

Another approach is that proposed by Ward Brown from Rohm and Haas Corp. US patent 2003/0134949 which describes the use of autoxidable alkoxysilane. Those alkoxisilane boost the resistance to weathering of plastic object and yet they do not provide enough radiation stability.

A transparent and abrasion resistant coating compositions is described in the US patent 4,500,669 with is made of a colloidal dispersion of metals, alloy, salts and oxides, but does not provide solution to damage caused by UV radiation.

Very few authors have tried to combine Sol-gel techniques and UV stability in order to obtain coating systems that are at the same time abrasion resistant and UV stable.

Moreover, it is clear that it would be a perfect match to have a glassy coating which combines the outstanding properties of glass such as electrical conductivity and thermal stability (e.g., polycarbonate T_{g}= 145° C.) with some UV protection.

The subject of the invention is a process for making a vitreous, hydrophobic coating on plastic substrates such as polycarbonate, polymethylmetacrylates and polyolefins among the others.

The technology used is the sol-gel techniques already described in our previous patent WO 2004/007384.

The sol-gel techniques for making coatings consists in making a suspension in alcoholic medium by mixing the component at room temperature, let the suspension gelling under controlled conditions and finally there is the drying step which could be considered like a curing step.

In reality this is a very general procedure because every type of coating requires a specific preparation process i.e. suspension composition, application of the suspension on the substrate (dip or spray or spin coating techniques) gelling conditions (T) and the drying procedure, solvent evaporation, T of curing, rate of drying.

The literature describes the use sol -gel techniques-based coating for several supports but the industrialisation of such methods have been always seen as problematic because of the high temperature required for curing, see for instance the patents 6,017,389, 6,130,152 and the Italian patent NO98 A00004.

The subject of the invention is a method to manufacture sol-gel based hydrophobic coatings with abrasion resistance and UV stability properties which requires mild conditions for the manufacturing and the application on the substrate.

The subject of the invention is a process for the preparation of hydrophobic transparent films on substrates comprising the following steps:
- preparation of a solution in a solvent of one or more alkoxides corresponding to the formula:

   Xm-Me-(OR)n-m (I)

   where Me is silicon; n is the valence of Me;
   X is R1 or OR1, with R1 equal or different from R, m is either zero or an integer number equal to or lower than 3;
   R and R1 are hydrocarbon radicals with a number of carbon atoms equal to or lower than 12;
- hydrolysis of the obtained solution in the presence of a catalyst;
- addition of a hydrophobic agent
- optional addition of a compound with ultraviolet radiation absorbing properties
- optional addition of a hydrophobic agent
- optional eventual addition of a antistatic and reducing reflectance agent
- optional addition of a compound with photocatalytic properties
- optional addition of a polymer as thickening agent
- optional addition of a compound with antibacterial properties
- deposition of the sol on the substrate of interest;
- final drying and curing of the coating;

The solution obtained by hydrolysis of a solution in an inorganic solvent of one or more alkoxides responding to the formula (I) can be a stable colloidal solution.

The alkoxide can be selected among tetramethylorthosilane, tretraethylorthosilane, tetraethoxyorthosilicate, tetrapropylorthosilicates, tetrabutylorthosilicate, ethyltriethoxysilane, methyltrimethoxysilane, methyltriethoxysilane or a mixture of the same.

The alkoxide solution where the organic solvent can be chosen among acetone, tetrahydrofurane, dioxane and ethanol. The concentration of the solution can be in a percentage 10 and 55 by weight.

The compound with ultraviolet radiation absorbing property can selected from the group of benzotriazoles, the s-triazines, the oxanilides, the salicylates, the hydroxybenzophenones, the benzoates and the α-cyanoacrylates and inorganic molecules from the group TiO₂ and ZnO. It can be in a percentage 0.7 and 8 by weight.

The compound with hydrophobic agent can be a tetrafluoroctyltriethoxysilane. It can be in a percentage 0.1 and 6 by weight.

The compound with antistatic and reducing reflectance properties can be selected from the group of tin oxide, indium oxide, antimony tin oxide and titanium oxide. It can be in a percentage between 0.1 and 5 by weight.

The polymer with thickening properties can be selected from the group polystyrene, polyvinylalcohol, polyvinylacetate, polyethyleneglycole with molecular weight between 300 and 12000. The percentage can be between 0.5% to 10%, more preferably between 2 and 5% by weight.

The compound with photocatalytic properties can be selected from the group titanium dioxide, zinc oxide. It can be in a percentage between 0.5% and 7% by weight.

The compound with antibacterial properties can be AgO. It can be in percentage between 0.05 and 5 by weight.

The alkoxide solution or mixture in the solvent can be between 20% and 60% by weight.

The hydrolysis of the alkoxide can be performed by addition of a controlled quantity of water.

The molar ratio H₂O/Me can be between 0.3 and 6, preferably between 1.5 and 3.

The catalyst can be an acid selected among the mineral acid and organic acids with Ka between 0.1 and 3.

The drying temperature can be between 60 and 200°C.

The process concerns the preparation of a sol in solution of one or more alkoxides having the formula:

Xₘ-Me- (OR)ₙ₋ₘ

where Me is silicon, n is the valence of Me
X is R₁ or OR₁, where R₁ is equal or different from R, and m is an integer number of either zero or an integer number equal or inferior to 3,
R and R1 are hydrocarbon moieties with atom carbon chain length up to 12.

According to the invention it has been found that the alkoxide is miscible in solvent such as tetrahydrofurane, acetone and ethanol.

In accordance with the invention, a hydrophobic agent and functional additive are employed to chemically modify the surfaces. Hydrophobic agents conventionally used in the art may be silicon-based agents including siloxane, silane or silicon; F-based hydrophobic agents such as fluorosilanes, fluoroalkylsilanes (FAS), polytetrafluoroethylene, polytrifluoroethylene, polyvinylfluoride, or functional fluoroalkyl compounds, preferred hydrophobic agent is Dynasil F8261 supplied by Degussa AG Germany.

Afterwards the hydrolysis is initiated by adding water solution of an acid. The hydrolysis reaction is exothermic and for this reason the temperature raises some degrees, the increase is very much dependent on batch size and hydrolysis conditions. As the maximal temperature is reached the organic UV-filter is added to the batch under stirring.

As soon as the solution has been prepared it is applied to a substrate by, for instance, dip coating or spin coating method.

Unlike the process described in the already cited US patent 6,017,389 the obtained solution is not refluxed for 1.5 hours but just stirred for few minutes, furthermore the molar ratio TEOS :Ethanol is always bigger than 1.2 whereas in the cited patent is lower. In the same patent it is claimed that the porous layer of silica is obtained in two steps process which concern two different solvents. The process that the authors are here reporting is also different from what has been reported in the US patent 3986997 (example 6) in which is reported a multi-steps process to manufacture the sol using a bigger than 1 molar ratio TEOS / Ethanol, whereas the authors suggest to use more ethanol than TEOS.

The mentioned UV-filter could be any of hydrobenzophenone, hydroxybenzotriazol or hydroxylphenyl-triazine derivatives EP 0 818 450.

Afterwards there is the gelletion step which is catalysed by organic or inorganic acid.

Deposition of the sol on the substrate which can be done either just after hydrolysis or while later just before the gelation takes place.

The substrate can be any known polymer.

In a preferred form of the invention the substrate can be selected from the group of polycarbonate, polymethylmetacrylate, polystyrene, polyethylene, polypropylene, polyvinylchloride, polyethylenephthalate, ABS, CR39 or nylon.

Preferred the substrate can be polycarbonate (PC), polystyrene or polymethylmetacrylate (PMMA).

The final step is the curing or drying of the sol already on the substrate surface. It is important that the temperature of curing is higher than 70 °C, preferably 80 to 120 °C. The curing can be done either in an oven where air is blown at high efficiency or under IR lamps or in any industrial method used to cure polymeric coatings, whereby the temperature is to be adapted to the substrate. I.e. for PMMA is better to have 80 °C while for PC is better to have 110 °C.

The formulation is in general terms fixed by the height of the layer to be obtained. For the PC the thickness is 800 nanometer while for PMMA is 500 nanometer.

### Examples

### Example 1

A 1 l round flask containing a magnetic stir bar is loaded with 261.8 g of ethanol and 197.28 g of tetraethoxysilane supplied by Degussa AG under the trade name Dynasil (TEOS).

At room temperature and under constant and strong stirring are then added very slowly 39.72g of HCl 1M. The temperature increase due to the hydrolysis reaction is of 20 °C.

The solution so obtained is then applied by dip coating (dipping speed 0.39cm/s) on rectangular polycarbonate plate (10cm length, 15 cm with, 0.3 cm thickness). The plate is then dried for 12 hours at 120 °C in an oven. The plate so obtained has undergone characterisation tests:

| | Hardness according to ASTM method | Transmittance at 300 nm (%) | Grid adhesion test | Surface roughness RA (nm) |
|---|---|---|---|---|
| Polycarbonate untreated | F | 71 | NA | 25.7 |
| Polycarbonate with coating | F | 72 | Fail | 23.0 |

Chemical stability towards butylacetate, acetone and tetrahydrofurane of the coated polycarbonate plate is unchanged when compared to the uncoated polycarbonate.

The hardness is measured according to method ASTM D336 by using a series of pencils with different hardness from 8B (the most soft) to 8H (the hardest) .

The coating adhesion was evaluated by grid adhesion test based on JIS K5400. A one-hundred-section grid was cut on the coated surface. Adhesive tape was applied to the grid, and then sharply removed (vertical to the surface). "Pass" means that no damages have been observed, conversely, "Fail" means at least one section damaged.

Surface roughness is determined by profilometer Taylor Mod. 222.

Chemical stability of coated material of the coated polycarbonate is checked by dipping the plate into pure solvent and checking visually if the solvent has changed the aesthetic of surface. Solvents tested: acetone, butylacetate and tetrahydrofurane.

The uncoated polycarbonate is not stable in those solvents.

### Example 2

A 1 l round flask containing a magnetic stir bar is loaded with 254.17g of ethanol and 191.53 g of tetraethoxysilane supplied by Degussa AG under the trade name Dynasil (TEOS).

At room temperature and under constant stirring are then added very slowly 39.72 g of HCl 1M. The temperature increase due to the hydrolysis reaction is of 20°C. When the temperature reached the maximum 14.56 g of Tinuvil 1130 Bis(-β-[3-(2-H-Benzotriazole-2-yl)-4-hydroxy-5-terbutylphenil]-propionic acid-polyethylenglycol)300-ester supplied by Ciba have been added to the solution.

The mixture so obtained is then applied by dip coating (dipping speed 0.39cm/s) on rectangular polycarbonate plate (10cm length, 15 cm with, 0.3 cm thickness). The plate is then dried for 12 hours at 120 °C in an oven. The plate so obtained has undergone characterisation tests:

| | Hardness according to ASTM method | Transmittance at 300 nm (%) | Grid adhesion test | Surface roughness RA (nm) |
|---|---|---|---|---|
| Polycarbonate untreated | F | 71 | NA | 25.7 |
| Polycarbonate with coating | 3H | 9 | Pass | 12.6 |

Chemical stability towards butylacetate, acetone and tetrahydrofurane of the coated polycarbonate plate is improved when compared to the uncoated polycarbonate plate. The coated polycarbonate under visual inspection did not change the surface appearance.

### Example 3

A 1 l round flask containing a magnetic stir bar is loaded with 261.09g of ethanol, 176.79 g of tetraethoxysilane supplied by Degussa AG under the trade name Dynasil A (TEOS) and 11.34 triethoxyphenylsilane supplied by Degussa AG Germany under the trade name Dynasil 9265.

At room temperature and under constant stirring are then added very slowly 40.78 g of HCl 1M. The temperature increase due to the hydrolysis reaction is of 20 °C.

The mixture so obtained is then applied by dip coating (dipping speed 0.39cm/s) on rectangular polycarbonate plate (10cm length, 15 cm with, 0.3 cm thickness). The plate is then dried for 12 hours at 120 °C in an oven. The plate so obtained has undergone characterisation tests:

| | Hardness according to ASTM method | Transmittance at 300 nm (%) | Grid adhesion test | Surface roughness RA (nm) |
|---|---|---|---|---|
| Polycarbonate untreated | F | 71 | NA | 25.7 |
| Polycarbonate with coating | H | 70 | Pass | 18.0 |

Chemical stability towards butylacetate, acetone and tetrahydrofurane of the coated polycarbonate plate is unchanged when compared to the uncoated polycarbonate plate.

### Example 4

A 1 l round flask containing a magnetic stir bar is loaded with 253.48 g of ethanol, 181.34 g of tetraethoxysilane supplied by Degussa AG under the trade name Dynasil A (TEOS) and 11.01 g of triethoxyphenylsilane upplied by Degussa AG Germany under the trade nameDynasil 9265.

At room temperature and under constant stirring are then added very slowly 39.59 g of HCl 1M. The temperature increase due to the hydrolysis reaction is of 20°C. When the temperature reached the maximum 14.56 g of Tinuvil 1130 Bis(-β-[3-(2-H-Benzotriazole-2-yl)-4-hydroxy-5-terbutylphenil]-propionic acid-polyethylenglycol)300-ester supplied by Ciba have been added to the solution.

The mixture so obtained is then applied by dip coating (dipping speed 0.39cm/s) on rectangular polycarbonate plate (10cm length, 15 cm with, 0.3 cm thickness). The plate is then dried for 12 hours at 120 °C in an oven. The plate so obtained has undergone characterisation tests:

| | Hardness according to ASTM method | Transmittance at 300 nm (%) | Grid adhesion test | Surface roughness RA (nm) |
|---|---|---|---|---|
| Polycarbonate untreated | F | 71 | NA | 25.7 |
| Polycarbonate with coating | 4H | 8 | Pass | 9.6 |

Chemical stability towards butylacetate, acetone and tetrahydrofurane of the coated polycarbonate plate is improved when compared to the uncoated polycarbonate plate. The coated polycarbonate under visual inspection did not change the surface appearance.

### Example 5

A 1 l round flask containing a magnetic stir bar is loaded with 253.48g of ethanol, 181.34 g of tetraethoxysilane supplied by Degussa AG under the trade name Dynasil A (TEOS) and 11.01 g of triethoxyphenylsilane supplied by Degussa AG Germany under the trade name Dynasil 9265.

At room temperature and under constant stirring are then added very slowly 39.59g of HCl 1M. The temperature increase due to the hydrolysis reaction is of 20°C. When the temperature reached the maximum 14.56 g of Tinuvil 1130 Bis(-β-[3-(2-H-Benzotriazole-2-yl)-4-hydroxy-5-terbutylphenil]-propionic acid-polyethylenglycol)300-ester supplied by Ciba have been added to the solution.

The mixture so obtained is then applied by dip coating (dipping speed 0.39cm/s) on rectangular polymethylmetacrylate plate (PMMA) (10cm length, 15 cm with, 0.3 cm thickness). The plate is then dried for 12 hours at 120 °C in an oven. The plate so obtained has undergone characterisation tests:

| | Hardness according to ASTM method | Transmittance at 300 nm (%) | Grid adhesion test | Surface roughness RA (nm) |
|---|---|---|---|---|
| Polycarbonate untreated | F | 21 | NA | 17.5 |
| Polycarbonate with coating | 4H | 3 | Pass | 12 |

Chemical stability towards dichloromethane of the coated PMMA plate is improved when compared to the uncoated PMMA plate. The coated polymethylmetacrylate plate under visual inspection did not change the surface appearance.

### Example 6

A 1 l round flask containing a magnetic stir bar is loaded with 250.98 g of ethanol, 181.34 g of tetraethoxysilane supplied by Degussa AG under the trade name Dynasil A (TEOS), 11.01 g of triethoxyphenylsilane supplied by Degussa AG Germany under the trade name Dynasil 9265 and 2.5 g Dynasil F8261 (tetrafluoroctyltriethoxysilane) supplied by Degussa AG.

At room temperature and under constant stirring are then added very slowly 39.59g of HCl 1M. The temperature increase due to the hydrolysis reaction is of 20°C. When the temperature reached the maximum 14.56 g of Tinuvil 1130 Bis(-β-[3-(2-H-Benzotriazole-2-yl)-4-hydroxy-5-terbutylphenil]-propionic acid-polyethylenglycol)300-ester supplied by Ciba have been added to the solution.

The mixture so obtained is then applied by dip coating (dipping speed 0.39cm/s) on rectangular polycarbonate plate (PC) (10cm length, 15 cm with, 0.3 cm thickness). The plate is then dried for 12 hours at 120 °C in an oven. The plate so obtained has undergone characterisation tests:

| | Hardness according to ASTM method | Transmittance at 300 nm (%) | Grid adhesion test | Surface roughness RA (nm) |
|---|---|---|---|---|
| Polycarbonate untreated | F | 71 | NA | 25.7 |
| Polycarbonate with coating | 2H | 11 | Pass | 6.1 |

Chemical stability towards butylacetate, acetone and tetrahydrofurane of the coated percarbonate plate is improved when compared to the uncoated percarbonate plate. The coated polycarbonate under visual inspection did not change the surface appearance.

### Example 7

A 1 l round flask containing a magnetic stir bar is loaded with 250.98 g of ethanol, 181.34 g of tetraethoxysilane supplied by Degussa AG under the trade name Dynasil A (TEOS), 11.01 g of triethoxyphenylsilane supplied by Degussa AG Germany under the trade name Dynasil 9265 and 2.5g tin oxide (ITO) .

At room temperature and under constant stirring are then added very slowly 39.59g of HCl 1M. The temperature increase due to the hydrolysis reaction is of 20°C. When the temperature reached the maximum 14.56 g of Tinuvil 1130 Bis(-β-[3-(2-H-Benzotriazole-2-yl)-4-hydroxy-5-terbutylphenil]-propionic acid-polyethylenglycol)300-ester supplied by Ciba have been added to the solution.

The mixture so obtained is then applied by dip coating (dipping speed 0.39cm/s) on rectangular polycarbonate plate (PC) (10cm length, 15 cm with, 0.3 cm thickness). The plate is then dried for 12 hours at 120 °C in an oven. The plate so obtained has undergone characterisation tests:

| | Hardness according to ASTM method | Transmittance at 300 nm (%) | Grid adhesion test | Surface roughness RA (nm) |
|---|---|---|---|---|
| Polycarbonate untreated | F | 71 | NA | 25.7 |
| Polycarbonate with coating | H | 11 | Pass | 21 |

The obtained coating has a porous aspect and is characterized by antireflecting properties such as minimum reflectance measured in the range 450 - 750 nm.

### Example 8

A 1 l round flask containing a magnetic stir bar is loaded with 254.17g of ethanol and 191.53 g of tetraethoxysilane supplied by Degussa AG under the trade name Dynasil (TEOS).

At room temperature and under constant stirring are then added very slowly 39.72g of HCl 1M. The temperature increase due to the hydrolysis reaction is of 20°C. When the temperature reached the maximum 14.56 g of Tinuvil 1130 Bis(-β-[3-(2-H-Benzotriazole-2-yl)-4-hydroxy-5-terbutylphenil]-propionic acid-polyethylenglycol)300-ester supplied by Ciba have been added to the solution with a solution made of 14 g THF plus 14 g of polystyrene.

The mixture so obtained is then applied by dip coating (dipping speed 0.39cm/s) on rectangular polycarbonate plate (10 cm length, 15 cm with, 0.3 cm thickness). The plate is then dried for 12 hours at 120 °C in an oven. The plate so obtained has undergone characterisation tests:

| | Hardness according to ASTM method | Transmittance at 300 nm (%) | Grid adhesion test | Surface roughness RA (nm) |
|---|---|---|---|---|
| Polycarbonate untreated | F | 71 | NA | 25.7 |
| Polycarbonate with coating | H | 9 | Pass | 11 |

The thickness of the coating is 3 micron whereas the same formulation without polymer has a thickness of 0.8 micron (see example 3).

Based on the obtained results one can infer that the basic coating formulation solvent, TEOS and acid can be strongly improved, performance-wise, by adding either the UV filter or the modified the ethoxysilane.

Without wishing to be bound to any theory it is believed that both component work as plasticisers making the glassy coating less fragile.

In the example 6 it has been listed also the Dynasil F8261 as agent for better hydrophobic effect.

These coatings are useful in a variety of substrate, here have been listed only PC and PMMA but in reality the process is suitable also, without limiting the scope of this invention, for polyethylene, polypropylene, polyvinylchloride, polyethylene-etereftalate, acrylnitrilebutadienstyrene (ABS), allyldiglycolcarbonate (CR39) and nylon.

## Claims

1. A process for the preparation of hydrophobic transparent films on substrates with the following steps:
- preparation of a solution in a solvent of one or more alkoxides corresponding to the formula:
Xm -Me- (OR) n-m (I)
where Me is silicon; n is the valence of Me;
X is R1 or OR1, with R1 equal or different from R, m is either zero or an integer number equal to or lower than 3;
R and R1 are hydrocarbon radicals with a number of carbon atoms equal to or lower than 12;
- hydrolysis of the obtained solution in the presence of a catalyst;
- addition of a hydrophobic agent
- optional addition of a compound with ultraviolet radiation absorbing properties;
- optional addition of a antistatic and reducing reflectance agent;
- optional addition of a compound with photocatalytic properties;
- optional addition of a polymer as thickening agent;
- optional addition of a compound with antibacterial properties;
- deposition of the sol on the substrate of interest;
- final drying and curing of the coating.

2. Process for the preparation of transparent films according to claim 1 where the hydrophobic agent is tetrafluoroctyltriethoxy-silane.

3. Process or the preparation of transparent films according to claim 1 in which the alkoxide is selected from tetramethyl-orthosilane, tetraethylorthosilane, tetraethoxyorthosilicate, tetrapropylorthosilicates, tetrabutylorthosilicate, ethyltriethoxysilane, methyltrimethoxysilane, methyltriethoxysilane, or a mixture of the same.

4. Process for the preparation of transparent films according to claim 1 where the organic solvent solution of the alkoxide is chosen from acetone, tetrahydrofurane, dioxane and ethanol.

5. Process for the preparation of transparent films according to claim 1 where the compound with ultraviolet radiation absorbing property is selected from the group of benzotriazoles, the s-triazines, the oxanilides, the salicylates, the hydroxybenzophenones, the benzoates and the α-cyanoacrylates and inorganic molecules from the group TiO₂ and ZnO.

6. Process for the preparation of transparent films according to claim 1 where the compound with antistatic and reducing reflectance properties is selected from the group tin oxide, indium oxide, antimony tin oxide and titanium oxide.

7. Process for the preparation of transparent films according to claim 1 where the polymer with thickening properties is selected from the group polystyrene, polyvinylalcohol, polyvinylacetate, polyethyleneglycole with molecular weight between 300 and 12000.

8. Process for the preparation of transparent films according to claim 1 where the compound with photocatalytic properties is selected from the group titanium dioxide, zinc oxide.

9. Process for the preparation of transparent films according to claim 1 where the compound with antibacterial properties is AgO.

10. Process for the preparation of films according to claim 1 where the alkoxide solution or mixture in the solvent is between 20% and 60% by weight.

11. Process for the preparation of films according to claim 1 where the hydrolysis of the alkoxide is performed by addition of a controlled quantity of water.

12. Process for the preparation of films according to claim 12 where the molar ratio H₂O/Me is between 0.3 and 6.

13. Process for the preparation of films according to claim 1 where the catalyst is an acid selected from mineral acid and organic acids with Ka between 0.1 and 3.

14. Process for the preparation of films according to claim 1 where the drying temperature is between 60 and 200°C.

## Patentansprüche

1. Verfahren zur Herstellung von hydrophoben transparenten Filmen auf Substraten mit den folgenden Schritten:
- Herstellung einer Lösung eines oder mehrerer Alkoxide der Formel:
Xm-Me-(OR)n-m (I)
wobei Me für Silicium steht; n für die Wertigkeit von Me steht; X für R1 oder OR1 steht, wobei R1 mit R identisch oder davon verschieden ist; m für null oder eine ganze Zahl kleiner gleich 3 steht;
R und R1 für Kohlenwasserstoffreste mit einer Zahl von Kohlenstoffatomen kleiner gleich 12 stehen;
in einem Lösungsmittel;
- Hydrolyse der erhaltenen Lösung in Gegenwart eines Katalysators;
- Zugabe eines hydrophoben Mittels;
- gegebenenfalls Zugabe einer Verbindung mit ultraviolettstrahlungsabsorbierenden Eigenschaften;
- gegebenenfalls Zugabe eines antistatischen und reflektanzverringernden Mittels;
- gegebenenfalls Zugabe einer Verbindung mit photokatalytischen Eigenschaften;
- gegebenenfalls Zugabe eines Polymers als Verdickungsmittel;
- gegebenenfalls Zugabe einer Verbindung mit antibakteriellen Eigenschaften;
- Abscheidung des Sols auf dem Substrat von Interesse;
- schließliches Trocknen und Härten der Beschichtung.

2. Verfahren zur Herstellung von transparenten Filmen nach Anspruch 1, wobei es sich bei dem hydrophoben Mittel um Tetrafluoroctyltriethoxysilan handelt.

3. Verfahren zur Herstellung von transparenten Filmen nach Anspruch 1, wobei es sich bei dem Alkoxid um Tetramethylorthosilicat, Tetraethylorthosilan, Tetraethylorthosilicat, Tetrapropylorthosilicate, Tetrabutylorthosilicat, Ethyltriethoxysilan, Methyltrimethoxysilan, Methyltriethoxysilan oder eine Mischung davon handelt.

4. Verfahren zur Herstellung von transparenten Filmen nach Anspruch 1, wobei das organische Lösungsmittel der Lösung des Alkoxids unter Aceton, Tetrahydrofuran, Dioxan und Ethanol ausgewählt wird.

5. Verfahren zur Herstellung von transparenten Filmen nach Anspruch 1, wobei die Verbindung mit ultraviolettstrahlungsabsorbierender Eigenschaft aus der Gruppe der Benzotriazole, der s-Triazine, der Oxanilide, der Salicylate, der Hydroxybenzophenone, der Benzoate und der α-Cyanacrylate und anorganischen Molekülen aus der Gruppe TiO₂ und ZnO ausgewählt wird.

6. Verfahren zur Herstellung von transparenten Filmen nach Anspruch 1, wobei die Verbindung mit antistatischen und reflektanzverringernden Eigenschaften aus der Gruppe Zinnoxid, Indiumoxid, Antimonzinnoxid und Titanoxid ausgewählt wird.

7. Verfahren zur Herstellung von transparenten Filmen nach Anspruch 1, wobei das Polymer mit verdickenden Eigenschaften aus der Gruppe Polystyrol, Polyvinylalkohol, Polyvinylacetat und Polyethylenglykol mit einem Molekulargewicht zwischen 300 und 12.000 ausgewählt wird.

8. Verfahren zur Herstellung von transparenten Filmen nach Anspruch 1, wobei die Verbindung mit photokatalytischen Eigenschaften aus der Gruppe Titandioxid und Zinkoxid ausgewählt wird.

9. Verfahren zur Herstellung von transparenten Filmen nach Anspruch 1, wobei es sich bei der Verbindung mit antibakteriellen Eigenschaften um AgO handelt.

10. Verfahren zur Herstellung von Filmen nach Anspruch 1, wobei die Menge an Alkoxid oder Mischung in Lösung in dem Lösungsmittel zwischen 20 und 60 Gew.-% beträgt.

11. Verfahren zur Herstellung von Filmen nach Anspruch 1, wobei die Hydrolyse des Alkoxids durch Zugabe einer kontrollierten Menge Wasser durchgeführt wird.

12. Verfahren zur Herstellung von Filmen nach Anspruch 12, wobei das Molverhältnis H₂O/Me zwischen 0,3 und 6 liegt.

13. Verfahren zur Herstellung von Filmen nach Anspruch 1, wobei es sich bei dem Katalysator um eine unter Mineralsäuren und organischen Säuren mit einem pKa-Wert von 0,1 bis 3 ausgewählte Säure handelt.

14. Verfahren zur Herstellung von Filmen nach Anspruch 1, wobei die Trocknungstemperatur zwischen 60 und 200°C liegt.

## Revendications

1. Procédé pour la préparation de films transparents hydrophobes sur des substrats comprenant les étapes suivantes :
- la préparation d'une solution dans un solvant d'un ou plusieurs alcoolates correspondant à la formule :
Xₘ - Me - (OR)ₙ₋ₘ (I)
dans laquelle Me est le silicium ; n est la valence de Me ; X est R1 ou OR1, R1 étant identique à R ou différent de R ; m est soit zéro soit un nombre entier inférieur ou égal à 3 ; R et R1 sont des radicaux hydrocarbonés ayant un nombre d'atomes de carbone inférieur ou égal à 12 ;
- l'hydrolyse de la solution obtenue en présence d'un catalyseur ;
- l'ajout d'un agent hydrophobe ;
- l'ajout éventuel d'un composé ayant des propriétés d'absorption du rayonnement ultraviolet ;
- l'ajout éventuel d'un agent antistatique et réduisant le pouvoir réflecteur ;
- l'ajout éventuel d'un composé ayant des propriétés photocatalytiques ;
- l'ajout éventuel d'un polymère comme agent épaississant ;
- l'ajout éventuel d'un composé ayant des propriétés antibactériennes ;
- le dépôt du sol sur le substrat d'intérêt ;
- le séchage final et le durcissement du revêtement.

2. Procédé pour la préparation de films transparents selon la revendication 1 dans lequel l'agent hydrophobe est le tétrafluorooctyltriéthoxysilane.

3. Procédé pour la préparation de films transparents selon la revendication 1 dans lequel l'alcoolate est choisi parmi l'orthosilicate de tétraméthyle, le tétraéthylorthosilane, l'orthosilicate de tétraéthyle, les orthosilicates de tétrapropyle, l'orthosilicate de tétrabutyle, l'éthyltriéthoxysilane, le méthyltriméthoxysilane, le méthyltriéthoxysilane ou un mélange de ceux-ci.

4. Procédé pour la préparation de films transparents selon la revendication 1 dans lequel le solvant organique de la solution de l'alcoolate est choisi parmi l'acétone, le tétrahydrofurane, le dioxane et l'éthanol.

5. Procédé pour la préparation de films transparents selon la revendication 1 dans lequel le composé ayant des propriétés d'absorption du rayonnement ultraviolet est choisi dans le groupe des benzotriazoles, des s-triazines, des oxanilides, des salicylates, des hydroxybenzophénones, des benzoates et des α-cyanoacrylates et des molécules inorganiques provenant du groupe constitué par TiO₂ et ZnO.

6. Procédé pour la préparation de films transparents selon la revendication 1 dans lequel le composé ayant des propriétés antistatiques et de réduction du pouvoir réflecteur est choisi dans le groupe constitué par l'oxyde d'étain, l'oxyde d'indium, l'oxyde d'antimoine et d'étain et l'oxyde de titane.

7. Procédé pour la préparation de films transparents selon la revendication 1 dans lequel le polymère ayant des propriétés épaississantes est choisi dans le groupe constitué par le polystyrène, le poly(alcool vinylique), le poly(acétate de vinyle) et les polyéthylèneglycols ayant une masse moléculaire comprise entre 300 et 12 000.

8. Procédé pour la préparation de films transparents selon la revendication 1 dans lequel le composé ayant des propriétés photocatalytiques est choisi dans le groupe constitué par le dioxyde de titane et l'oxyde de zinc.

9. Procédé pour la préparation de films transparents selon la revendication 1 dans lequel le composé ayant des propriétés antibactériennes est AgO.

10. Procédé pour la préparation de films selon la revendication 1 dans lequel la quantité d'alcoolate ou de mélange en solution dans le solvant est comprise entre 20 % et 60 % en poids.

11. Procédé pour la préparation de films selon la revendication 1 dans lequel l'hydrolyse de l'alcoolate est effectuée par ajout d'une quantité mesurée d'eau.

12. Procédé pour la préparation de films selon la revendication 12 dans lequel le rapport molaire H₂O/Me est compris entre 0,3 et 6.

13. Procédé pour la préparation de films selon la revendication 1 dans lequel le catalyseur est un acide choisi parmi un acide minéral et les acides organiques ayant un pKa compris entre 0,1 et 3.

14. Procédé pour la préparation de films selon la revendication 1 dans lequel la température de séchage est comprise entre 60 et 200 °C.
